# EUROPÄISCHE PATENTSCHRIFT

(11) **EP 0 392 977 B1**
(45) Veröffentlichungstag und Bekanntmachung des Hinweises auf die Patenterteilung: **10.11.1993**
(21) Anmeldenummer: 90810269.2
(22) Anmeldetag: 03.04.1990
(51) Int. Cl.: H04N 5/74, H04N 5/21, H04N 9/64

(54) **Kompensationsschaltung zur Korrektur von Bildfehlern eines Bildprojektionssystems**
Compensating circuit for correcting picture faults of an image projection system
Circuit de compensation pour corriger les défauts d'image d'un système de projection d'image

(30) Priorität: 10.04.1989 CH 1352/89
(43) Veröffentlichungstag der Anmeldung: 17.10.1990
(73) Patentinhaber: GRETAG Aktiengesellschaft, CH-8105 Regensdorf (CH)
(72) Erfinder: Roth, Philippe, CH-8114 Dänikon (CH)
(74) Vertreter: Kleewein, Walter, Dr.

(56) Entgegenhaltungen:
- EP-A- 0 258 883
- FERNSEH & KINO TECHNIK, Band 41, Nr.4, April 1987, Seiten 125-130, Heidelberg, DE; R. KAYS: "Grossbildprojektion für professionelle Anwendungen"
- IEEE TRANSACTIONS ON CONSUMER ELECTRONICS, Band 34, Nr. 1, Februar 1988, Seiten 205-227, IEEE, New York, NY, US; D. TEICHNER: "Three-dimensional pre- and post-filtering for PAL TV signals"

## Beschreibung

Die Erfindung betrifft eine Kompensationsschaltung zur Korrektur von Bildfehlern eines Bildprojektionssystems nach dem Steuerschichtprinzip gemäss Oberbegriff des Patentanspruchs 1.

Eine derartige Kompensationsschaltung ist in der EP-A-258 883 beschrieben und dient dazu, Störungen im projizierten Bild zu unterdrücken, die durch eine Speicherungsüberhöhung oder eine Randüberhöhung entstehen, wenn zwischen benachbarten Zeilen des Projektionsbildes ein Übergang von dunklen Zeilen bzw. Zeilenabschnitten zu hellen Zeilen bzw. hellen Zeilenabschnitten oder ein umgekehrter Übergang erfolgt. Besonders bei einem Hochzeilenfernsehsystem sind die durch die Deformation der als Ölfilm ausgebildeten Steuerschicht auftretenden Helligkeitsüberhöhungen an Zeilenpaketrändern störend. Zur Eliminierung der Störungen an horizontalen Kanten erfolgt bei der bekannten Kompensationsschaltung eine Vertikalfilterung, bei der eine stufenförmige Kante des Eingangssignals des Vertikalfilters in einen allmählichen Übergang umgewandelt wird. Dabei wird jedoch nicht nur das Auftreten von hellen störenden Effekten an horizontalen Kanten durch die Filterung in vertikaler Richtung unterdrückt, sondern auch wegen einer Veränderung der Raumfrequenzen ein Verschmieren der horizontalen Kante in vertikaler Richtung bewirkt. Der sich dadurch ergebende Verlust an Auflösung ist besonders bei einem Hochzeilenfernsehsystem störend.

Bei der bekannten Kompensationsschaltung verfügt der erste Addierer über drei Eingänge zum Einspeisen der Videosignale dreier benachbarter Zeilen. Die Einspeisung der Videosignale erfolgt dabei über Koeffizientenmultiplizierer, die die oberste und die unterste der drei Zeilen jeweils mit einem festen Faktor von 0,25 multiplizieren. Das Videosignal der mittleren Zeile wird durch den zugeordneten Koeffizientenmultiplizierer ebenfalls mit einem festen Faktor multipliziert, der dem zweifachen negativen Wert des für die unterste und oberste Zeile verwendeten Kompensationsfaktor entspricht.

Der Erfindung liegt die Aufgabe zugrunde, eine Kompensationsschaltung zu schaffen, deren vertikale Auflösung verbessert ist, so daß auch feinere periodische vertikale Strukturen ohne den Defekt des Überschwingens oder Differenzierens sowie ohne den Defekt der Verschmierung als graue Fläche darstellbar sind.

Diese Aufgabe wird erfindungsgemäß durch eine Kompensationsschaltung mit den Kennzeichnenden Merkmalen des Patentanspruchs 1 gelöst.

Dadurch, daß bei der Erzeugung des Kompensationssignals statt durch die Schaltung fest vorgegebene Kompensationsfaktoren variable an den Bildinhalt angepaßte Kompensationsfaktoren verwendet werden, ist eine Anpassung des Kompensationsfaktors in der Weise möglich, daß für helle Bildpunkte eine geringere Kompensation und damit lediglich ein geringeres Absenken des Bildhelligkeitspegels als beim Anheben des Bildhelligkeitspegels bei im Verhältnis zur Umgebung dunklen Bildpunkten erfolgt. Dabei werden im Projektionsbild die unerwünschten Helligkeitsüberhöhungen unterdrückt, ohne daß ein zu großer Verlust an vertikaler Auflösung hingenommen werden zu braucht. Bei der Kompensationsschaltung ergibt sich eine Reduktion des Bildhelligkeitspegels bei dunkleren vertikalen Nachbarn, die geringer ist als die Erhöhung eines Bildhelligkeitspegels bei helleren Nachbarn mit gleicher absoluter Pegeldifferenz. Außerdem ist die Korrektur eines dunklen Punktes bei gleicher Pegeldifferenz zu den Nachbarn größer als die Korrektur eines Punktes mittlerer Helligkeit. Bei der Korrektur eines Bildpunktes mit zwei Nachbarn gleicher Pegeldifferenz beträgt die Korrektur weniger als das Doppelte einer Korrektur bei nur einem Nachbarn mit der gleichen Pegeldifferenz. Eine vor der Korrektur vorhandene Pegeldifferenz zwischen zwei Punkten wird auch nach der Korrektur beider Punkte bei der erfindungsgemäßen Kompensationsschaltung nicht zu Null.

Die Kompensationsschaltung ist in erster Linie so aufgebaut, daß eine Korrektur von der Differenz der Bildhelligkeitspegel vertikal benachbarter Bildpunkte abhängig ist. Es ist auch möglich, die Korrektur in Abhängigkeit des aktuellen Bildhelligkeitspegels und der Differenz der Bildhelligkeitspegel vertikal benachbarter Bildpunkte auszuführen.

Bei einem zweckmäßigen Ausführungsbeispiel der Erfindung verfügt der dem ersten Addierer zugeordnete Schaltkreis über einen in die Verbindung zwischen dem Ausgang des ersten Addierers und dem Kompensationseingang des zweiten Addierers geschalteten Koeffizientenmultiplizierer, durch den das Ausgangssignal des ersten Addierers in Abhängigkeit vom Helligkeitspegel des jeweiligen Bildpunktes auf der mittleren Zeile mit einem Kompensationsfaktor multiplizierbar ist. Dadurch, daß der Koeffizientenmultiplizierer im Ausgangskreis und nicht im Eingangskreis des ersten Addierers liegt, können Bauelemente eingespart werden.

Dem Koeffizientenmultiplizierer ist ein Pegelauswertungsschaltkreis zugeordnet, der mit dem Videosignal der mittleren Zeile gespeist wird und gemäß einer vorgegebenen Kennlinie als Ausgangssignal ein Kompensationsfaktorsignal erzeugt, dessen Wert beim Ansteigen des erfaßten Bildhelligkeitspegels kleiner wird. Die Kennlinie des Pegelauswertungsschaltkreis kann sich linear abfallend zwischen 0,5 und 0 erstrecken oder aber die Gestalt einer anderen abfallenden nichtlinearen Funktion haben.

Gemäß einer Ausgestaltung der Erfindung wird dem zweiten Addierer das Kompensationssignal nur dann zugeführt, wenn dieses einen positiven Wert hat. Zu diesem Zweck kann im Ausgangskreis des ersten Addierers ein elektronisch steuerbar Schalter vorgesehen sein, der bei negativen Ausgangssignalen des ersten Addierers geöffnet ist. Zur Steuerung des Schalters dient ein Vorzeichenprüfschaltkreis, der mit dem Ausgangssignal des ersten Addierers gespeist ist.

Der Schalter am Ausgang des ersten Addierers kann als Multiplizierer ausgebildet sein, dem einerseits das Ausgangssignal des ersten Addierers und andererseits das Ausgangssignal des Vorzeichenprüfschaltkreises zugeführt wird, wobei das Ausgangssignal des Vorzeichenprüfschaltkreises entweder den Wert 0 oder den Wert 1 als Eingangsfaktor liefert.

Gemäß einer Abwandlung kann der Vorzeichenprüfschaltkreis auch so gestaltet sein, daß er bei einem Übergang von negativen Werten auf positive Werte nicht von 0 auf 1 springt, sondern allmählich zwischen Werten nahe bei 0 auf Werte nahe bei 1 übergehende Eingangsfaktoren für den Multiplizierer liefert.

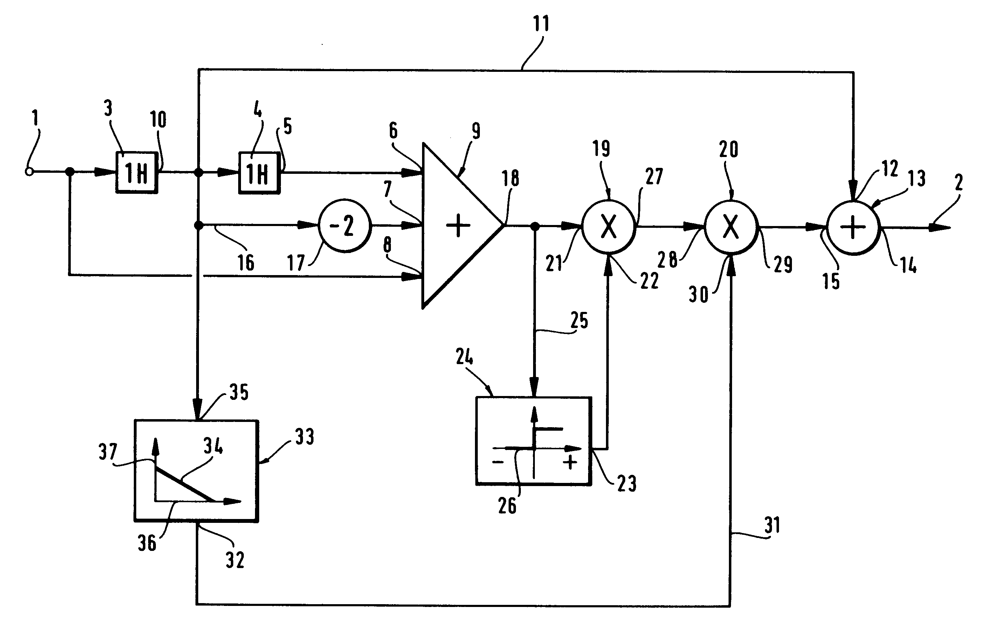

Nachfolgend wird ein Ausführungsbeispiel der Erfindung anhand der Zeichnung beschrieben, die eine einzige Figur umfaßt, welche ein Blockschaltbild der erfindungsgemäßen Kompensationsschaltung darstellt.

Die in der Zeichnung dargestellte Kompensationsschaltung verfügt über einen Eingang 1, an dem das einem Schwarz/Weiß-Bild zugeordnete Videosignal oder das einem Farbauszug in einer von drei Farben eines Farbbildes zugeordnete Videosignal anliegt. Die Kompensationsschaltung stellt ein spezielles Filter dar, das mit analogen oder digitalen Bausteinen aufgebaut sein kann. Entsprechend handelt es sich bei den einzelnen Komponenten der Kompensationsschaltung um Analogschaltkreise oder Digitalschaltkreise und bei dem Videosignal um ein analoges oder digitalisiertes Videosignal. Am Ausgang 2 der Kompensationsschaltung liegt das gefilterte analoge oder digitale Videosignal an, das zur Einspeisung in den zugeordneten Kanal der Bildprojektionsvorrichtung vorgesehen ist.

Der Eingang 1 ist mit einem ersten Zeilenspeicher 3 verbunden. Der Zeilenspeicher 3 gestattet es, eine Zeile eines Fernsehbildes zwischenzuspeichern. Dem ersten Zeilenspeicher 3 ist ein zweiter Zeilenspeicher 4 nachgeschaltet. Am Ausgang 5 liegt somit immer ein Bildhelligkeitspegel für einen Bildpunkt an, der um zwei Zeilen vertikal im Fernsehbild gegenüber einem Bildpunkt verschoben ist, dessen Bildhelligkeitspegel gerade am Eingang 1 vorliegt. Der erste Zeilenspeicher 3 und der zweite Zeilenspeicher 4 gestatten somit das parallele Zuführen der Videosignale dreier benachbarter Zeilen zu den Eingängen 6, 7 und 8 eines ersten Addierers 9.

Am Ausgang 10 des ersten Zeilenspeichers 3 liegt jeweils das Videosignal einer mittleren von drei Zeilen an, mit denen die Eingänge 6 bis 8 des ersten Addierers 9 beaufschlagt sind. Das Videosignal der mittleren Zeile wird zusätzlich über eine Leitung 11 zum Bildsignaleingang 12 eines zweiten Addierers 13 geleitet. Am Ausgang 14 des zweiten Addierers 13 wird das kompensierte Videosignal abgegriffen, das durch Addieren des auf der Leitung 11 anliegenden Videosignals und des an einem Kompensationseingang 15 des zweiten Addierers 13 eingespeisten Kompensationssignals erzeugt wird.

Der Ausgang 10 des ersten Zeilenspeichers 3 ist über eine Leitung 16 und über einen Konstant-Koeffizientenmultiplizierer mit dem in der Zeichnung mittleren Eingang 7 des Addierers 9 verbunden. Der Konstant-Koeffizientenmultiplizierer 17 multipliziert die Werte des auf der Leitung 16 ankommenden Videosignals der mittleren der drei Zeilen mit dem Faktor -2.

Da das am Eingang 1 anliegende Videosignal der untersten der drei gleichzeitig verarbeiteten Zeilen den in der Zeichnung untersten Eingang 8 des ersten Addierers 9 und das am Ausgang 5 anliegende Videosignal der obersten Zeile den obersten Eingang 6 des ersten Addierers 9 unmittelbar beaufschlagt, bildet der erste Addierer jeweils die Summe der Bildhelligkeitspegel des obersten und des untersten Bildpunktes einer einspaltigen Bildmatrix, die sich vertikal über drei Zeilen erstreckt, wobei das Doppelte des Bildhelligkeitspegels des mittleren Bildpunktes abgezogen wird.

Der erste Addierer 9 liefert an seinem Ausgang 18 ein Signal, das mit Hilfe eines Multiplizierers 19 und eines Koeffizientenmultiplizierers 20 weiterverarbeitet wird, um das dem Kompensationseingang 15 zuzuführende Kompensationssignal zu erzeugen.

Der Multiplizierer 19, der bei einer abgewandelten Kompensationsschaltung durch eine direkte Brücke oder durch einen elektronisch betätigbaren Ein-/Aus-Schalter ersetzt sein kann, ist mit seinem ersten Eingang 21 mit dem Ausgang 18 des ersten Addierers 9 verbunden. Der zweite Eingang 22 des Multiplizierers 19 wird mit einem Eingangsfaktorsignal beaufschlagt, das am Ausgang 23 eines Vorzeichenprüfschaltkreises 24 auftritt und bei einem Ausführungsbeispiel entweder den Wert 0 oder den Wert 1 aufweist. Eine Multiplikation mit dem Wert 0 entspricht dabei einem Öffnen eines Schalters und die Multiplikation mit dem Wert 1 entspricht dabei einem Schließen eines Schalters. Wenn statt des Multiplizierers 19 ein elektronischer Schalter vorgesehen ist, kann dieser auch direkt mit dem binären Eingangsfaktorsignal gesteuert werden.

Der Vorzeichenprüfschaltkreis 24 wird über eine Eingangsleitung 25 mit dem Ausgangssignal des ersten Addierers 9 beaufschlagt und stellt fest, ob die Summe der Bildhelligkeitspegel der Bildpunkte der Bildmatrix in der obersten und untersten Zeile größer oder kleiner als das Doppelte des Bildhelligkeitspegels des Bildpunktes der gleichen Spalte in der mittleren Zeile ist. Wenn das Ausgangssignal des Addierers 9 negativ ist, liefert der Ausgang 23 das Signal 0, so daß die Erzeugung eines Kompensationssignals unterdrückt wird. Auf diese Weise ergibt sich eine Steuerung in Abhängigkeit von den Pegeldifferenzen zwischen den Bildhelligkeiten dreier Punkte, die in einer Bildspalte übereinander liegen. Zur Veranschaulichung der Funktion des Vorzeichenschaltkreises 24 ist die Kennlinie 26 als Stufenfunktion in dem den Vorzeichenprüfschaltkreis 24 darstellenden Block eingezeichnet. Abweichend von der eingezeichneten Stufenfunktion zur Koppelfaktorbestimmung kann auch eine von der Stufenfunktion abweichende Funktion als Kennlinie vorgesehen sein, die im negativen Bereich am Ausgang 23 Werte in der Nähe von 0 und im positiven Bereich am Ausgang 23 Werte nahe bei 1 liefert, wobei der Übergang nicht stufenförmig, sondern abgeflacht verläuft.

Der Ausgang 27 des Multiplizierers 19 ist mit dem Signaleingang 28 des Koeffizientenmultiplizierers 20 verbunden, dessen Ausgang 29 ein Signal liefert, mit dem der Kompensationseingang 15 des zweiten Addierers 13 beaufschlagt ist. Der Koeffizientenmultiplizierer 20 gestattet eine Gewichtung und eine Anpassung der Amplitude des Kompensationssignals durch ein am Faktoreingang 30 eingespeistes Kompensationsfaktorsignal, das Werte zwischen 0 und 0,5 annehmen kann. Bei Werten nahe 0 erfolgt nur eine geringe Kompensation, während bei Werten in der Nähe von 0,5 eine starke Kompensation des am Eingang 1 eingespeisten und am Ausgang 2 ausgegebenen Videosignals erfolgt.

Der Faktoreingang 30 ist über eine Leitung 31 mit dem Ausgang 32 eines Pegelauswertungsschaltkreises 33 verbunden, der die in den Block des Pegelauswertungsschaltkreises 33 eingezeichnete Kennlinie 34 aufweist. Der Eingang 35 des Pegelauswertungsschaltkreises 33 ist mit dem Ausgang 10 des ersten Zeilenspeichers 3 verbunden und erhält somit jeweils die Bildhelligkeitspegelsignale eines Bildpunktes auf der mittleren Zeile der drei benachbarten und zur Erzeugung des Kompensationssignals jeweils berücksichtigten Zeilen.

Wie man der Kennlinie 34 entnehmen kann, erzeugt der Pegelauswertungsschaltkreis 33 bei einem hohen Bildhelligkeitssignalpegel, der entlang der Abszisse 36 aufgetragen ist, ein kleines Kompensationsfaktorsignal, das entlang der Ordinate 37 eingezeichnet ist. Der Kennlinie 34 kann man weiterhin entnehmen, daß das Kompensationsfaktorsignal bei einem kleinen Bildhelligkeitspegel groß ist. Auf diese Weise ist das auf der Leitung 31 anliegende Kompensationsfaktorsignal sowie das dem Kompensationseingang 15 zugeführte Kompensationssignal bei niedrigen Bildsignalpegeln maximal und bei hohen Bildsignalpegeln minimal. Dadurch ergibt sich eine nichtlineare Korrektur des Videosignals, bei der eine Kompensation der Heiligkeitsüberhöhung infolge der physikalischen Eigenschaften der Steuerschicht des Projektionssystems nicht mit einem erheblichen Verlust an vertikaler Auflösung erkauft werden muß.

Statt der im Block des Pegelauswertungsschaltkreises 33 eingezeichneten geraden Kennlinie 34 können auch andere Funktionen, wie insbesondere quadratische Funktionen oder Logarithmusfunktionen, verwendet werden. Bei einer vereinfachten Ausführungsform ist es auch möglich, ganz auf den Pegelauswertungsschaltkreis 33 zu verzichten und eine Anpassung des Kompensationssignals lediglich mit Hilfe des Multiplizierers 19 unter Verzicht auf den Koeffizientenmultiplizierer 20 durchzuführen.

## Patentansprüche

1. Kompensationsschaltung zur Korrektur von Bildfehlern eines Bildprojektionssystems nach dem Steuerschichtprinzip, bei dem mittels einer Schlierenoptik ein Elektronenstrahl den Lichtstrom einer starken Lichtquelle steuert, wobei für das Videosignal eines jeden anzeigbaren Farbauszuges bzw. eines Schwarz/Weiss-Bildes zwei Zeilenspeicher (3, 4), wenigstens ein Koeffizientenmultiplizierer (17), ein erster Addierer (9) zum Erzeugen eines Kompensationssignals aus den Bildsignalen von jeweils drei Bildpunkten, die in drei aufeinanderfolgenden Zeilen vertikal untereinander angeordnet sind, und ein zweiter Addierer (13) zum Addieren des Kompensationssignals zum Bildsignal des Bildpunktes aus der mittleren der drei benachbarten Zeilen vorgesehen sind, dadurch gekennzeichnet, dass dem ersten Addierer (9) ein Vorzeichenprüfschaltkreis (24) nachgeschaltet ist, der mit einem zwischen dem ersten Addierer (9) und dem zweiten Addierer (13) im Signalpfad angeordneten Multiplizierer oder Schalter (19) verbunden ist und diesen in Abhängigkeit vom detektierten Vorzeichen des Ausgangssignals (18) des ersten Addierers (9) derart steuert, dass der Multiplizierer oder Schalter (19) bei negativem Vorzeichen des Ausgangssignals (18) das Kompensationssignal unterdrückt.

2. Kompensationsschaltung nach Anspruch 1, dadurch gekennzeichnet, dass am Eingang (22) des Multiplizierers oder Schalters (19) ein Steuersignal (23) anliegt, welches vom Vorzeichenprüfschaltkreis (24) erzeugbar ist und bei positivem Vorzeichen des Ausgangssignals (18) des ersten Addierers (9) den Wert 1 und bei negativem Vorzeichen den Wert 0 aufweist, und dass am Ausgang (27) des Multiplizieres oder Schalters (19) bei einem Steuersignal (23) mit dem Wert 1 das Kompensationssignal anliegt, und anderfalls das Kompensationssignal unterdrückt ist.

3. Kompensationsschaltung nach Anspruch 1, dadurch gekennzeichnet, dass im Signalpfad zwischen dem ersten (9) und dem zweiten Addierer (13) ein Multiplizierer (19) angeordnet ist, der mit dem Vorzeichenprüfschaltkreis (24) verbunden ist, dass am Eingang (22) des Multiplizierers (19) ein Steuersignal (23) anliegt, welches der Vorzeichenprüfschaltkreis (24) erzeugt, und das bei negativem Vorzeichen des Ausgangssignals (18) des ersten Addierers (9) einen Wert nahe 0 und bei positivem Vorzeichen steigende positive Werte bis nahe 1 aufweist, und dass am Ausgang (27) des Multiplizierers (19) ein Kompensationssignal anliegt, welches der multiplikativen Verknüpfung des Ausgangsignals (18) des ersten Addierers (9) mit dem Steuersignal (23) entspricht.

4. Kompensationsschaltung nach Anspruch 3, dadurch gekennzeichnet, dass der Vorzeichenprüfschaltkreis (24) eine Kennlinie (26) aufweist, die zwischen einer Stufenfunktion und einer nichtlinear steigenden Funktion justierbar ist.

5. Kompensationsschaltung nach einem der vorangehenden Ansprüche, dadurch gekennzeichnet, dass zwischen dem Ausgang (27) des Multiplizierers oder Schalters (19) und dem zweiten Addierer (13) ein Koeffizientenmultiplizierer (20) im Signalpfad angeordnet ist, mit Hilfe dessen das Kompensationssignal in Abhängigkeit vom Helligkeitspegel des jeweiligen Bildpunktes auf der mittleren Zeile mit einem Kompensationsfaktorsignal multiplizierbar ist.

6. Kompensationsschaltung nach Anspruch 5, dadurch gekennzeichnet, dass der Koeffizientenmultiplizierer (20) mit einem Pegelauswertungsschaltkreis (33) verbunden ist, dessen Eingang (35) wiederum mit dem Ausgang (10) des ersten Zeilenspeichers (3) verbunden ist, und dass mit Hilfe des Pegelauswertungsschaltkreises (33) in Abhängigkeit des Helligkeitspegels des jeweiligen Bilpunktes auf der mittleren Zeile das Kompensationsfaktorsignal erzeugbar ist, das mit steigendem Helligkeitspegel abfällt.

7. Kompensationsschaltung nach Anspruch 6, dadurch gekennzeichnet, dass das Kompensationsfaktorsignal Werte zwischen 0 und 0,5 aufweist.

8. Kompensationsschaltung nach Anspruch 6, dadurch gekennzeichnet, dass der Pegelauswertungsschaltkreis (33) eine Kennlinie (34) aufweist, die nichtlinear ist.

9. Kompensationsschaltung nach Anspruch 8, dadurch gekennzeichnet, dass die Kennlinie (34) gemäss einer quadratischen Funktion oder einer logarithmischen Funktion verläuft.

## Claims

1. A compensation circuit for the correction of image defects of an image projection system according to the control layer principle in which an electron beam controls the luminous flux of a strong source of light by means of schlieren optics, there being provided for the video signal of any one displayable colour extract or a black/white image two line memories (3, 4), at least one coefficient multiplier (17), a first adder (9) for generating a compensation signal from the image signals of three image points in each case which are arranged vertically beneath one another in three successive lines, and a second adder (13) for adding the compensation signal to the image signal of the image point from the middle line of the three adjacent lines, wherein there is connected downstream of the first adder (9) a sign testing circuit (24) which is connected to a multiplier or switch (19) arranged in the signal path between the first adder (9) and the second adder (13) and controls the multiplier or switch (19) in dependence upon the detected sign of the output signal (18) of the first adder (9) such that the multiplier or switch (19) suppresses the compensation signal when the sign of the output signal (18) is negative.

2. A compensation circuit according to claim 1, wherein a control signal (23) is present at the input (22) of the multiplier or switch (19), which control signal can be generated by the sign testing circuit (24) and has the value 1 when the sign of the output signal (18) of the first adder (9) is positive and the value O when the sign is negative, and the compensation signal is present at the output (27) of the multiplier or switch (19) in the case of a control signal (23) having the value 1 and, otherwise, the compensation signal is suppressed.

3. A compensation circuit according to claim 1, wherein there is arranged in the signal path between the first adder (9) and the second adder (13) a multiplier (19) which is connected to the sign testing circuit (24), a control signal (23) produced by the sign testing circuit (24) is present at the input (22) of the multiplier (19) and has a value close to 0 when the sign of the output signal (18) of the first adder (9) is negative and positive values increasing to near 1 when the sign is positive, and a compensation signal corresponding to the multiplicative combination of the output signal (18) of the first adder (9) with the control signal (23) is present at the output (27) of the multiplier (19).

4. A compensation circuit according to claim 3, wherein the sign testing circuit (24) has a characteristic line (26) which is adjustable between a step function and a non-linearly increasing function.

5. A compensation circuit according to any one of the preceding claims, wherein there is arranged in the signal path between the output (27) of the multiplier or switch (19) and the second adder (13) a coefficient multiplier (20) by means of which the compensation signal can be multiplied by a compensation factor signal in dependence upon the brightness level of the respective image point on the middle line.

6. A compensation circuit according to claim 5, wherein the coefficient multiplier (20) is connected to a level evaluating circuit (33) the input (35) of which is in turn connected to the output (10) of the first line memory (3), and the compensation factor signal can be generated by means of the level evaluating circuit (33) in dependence upon the brightness level of the respective image point on the middle line, which compensation factor signal falls away as the brightness level increases.

7. A compensation circuit according to claim 6, wherein the compensation factor signal has values between O and 0.5.

8. A compensation circuit according to claim 6, wherein the level evaluating circuit (33) has a characteristic line (34) which is non-linear.

9. A compensation circuit according to claim 8, wherein the characteristic line (34) extends according to a quadratic function or a logarithmic function.

## Revendications

1. Circuit de compensation pour corriger les défauts d'image d'un système de projection d'image selon le principe de la couche de commande, circuit dans lequel, au moyen d'une optique stroboscopique, un faisceau électronique commande le faisceau lumineux d'une forte source lumineuse, circuit dans lequel sont prévus, pour le signal vidéo de chacune des couleurs primaires à visualiser ou d'une image en noir et blanc, deux mémoires de lignes (3, 4), au moins un multiplicateur à coefficients (17), un premier additionneur (9) pour produire un signal de compensation à partir des signaux images de, chaque fois, trois points-images qui sont disposés verticalement l'un au-dessous de l'autre sur trois lignes successives, ainsi qu'un second additionneur (13) pour additionner le signal de compensation au signal image du point - image de celle des trois lignes voisines qui est la ligne médiane, circuit caractérisé par le fait qu'en aval du premier additionneur (9) est monté un circuit (24) de vérification du signe qui est relié avec un multiplicateur ou un commutateur (19) disposé, sur le chemin du signal, entre le premier additionneur (9) et le second additionneur (13), et qui commande ce multiplicateur ou cet interrupteur en fonction du signe, détecté, du signal de sortie (18) du premier additionneur (9) de façon qu'en présence d'un signe négatif du signal de sortie (18), le multiplicateur ou le commutateur (19) supprime le signal de compensation.

2. Circuit de compensation selon la revendication 1, caractérisé par le fait qu'à la sortie (22) du multiplicateur ou du commutateur (19) se trouve un signal de commande (23), qui peut être produit par le circuit (24) de vérification du signe et qui, en présence d'un signe positif du signal de sortie (18) du premier additionneur (9), présente la valeur 1 et, en présence d'un signe négatif, présente la valeur 0 et par le fait qu'en présence d'un signal de commande (23) de valeur 1, le signal de compensation apparait à la sortie (27) du multiplicateur ou du commutateur (19), et que, sinon, le signal de compensation est supprimé.

3. Circuit de compensation selon la revendication 1, caractérisé par le fait que sur le chemin du signal, entre le premier (9) et le second (13) additionneurs est disposé un multiplicateur (19) qui est relié avec le circuit (24) de vérification du signe, par le fait qu'à l'entrée (22) du multiplicateur (19) se trouve un signal de commande (23) que produit le circuit (24) de vérification du signe et qui, dans le cas d'un signe négatif du signal de sortie (18) du premier additionneur (9), présente une valeur proche de 0 et, dans le cas d'un signe positif, présente des valeurs positives croissantes devenant proches de 1, et par le fait qu'à la sortie (27) du multiplicateur (19) se trouve un signal de compensation qui correspond à la liaison logique "multiplication" du signal de sortie (18) du premier additionneur (19) par le signal de commande (23).

4. Circuit de compensation selon la revendication 3, caractérisé par le fait que le circuit (24) de vérification du signe présente une caractéristique (26), qui peut s'ajuster entre une fonction étagée et une fonction croissante non linéaire.

5. Circuit de compensation selon l'une des revendications précédentes, caractérisé par le fait qu'entre la sortie (27) du multiplicateur ou du commutateur (19) et le second additionneur (13) est disposé, sur le chemin du signal, un multiplicateur à coefficients (20), à l'aide duquel le signal de compensation peut être multiplié par un signal de facteur de compensation en fonction du niveau de luminance du point-image respectif situé sur la ligne médiane.

6. Circuit de compensation selon la revendication 5, caractérisé par le fait que le multiplicateur à coefficients (20) est relié avec un circuit (33) d'évaluation du niveau, dont l'entrée (35) est elle-même reliée avec la sortie (10) de la première mémoire de lignes (3) et par le fait qu'à l'aide du circuit (33) d'évaluation du niveau peut être produit, en fonction du niveau de luminance du point image respectif situé sur la ligne médiane, le signal de facteur de compensation qui décroît lorsque le niveau de luminance croît.

7. Circuit de compensation selon la revendication 6, caractérisé par le fait que le signal du facteur de compensation présente des valeurs comprises entre 0 et 0,5.

8. Circuit de compensation selon la revendication 6, caractérisé par le fait que le circuit (33) d'évaluation du niveau présente une caractéristique (34) qui est non linéaire.

9. Circuit de compensation selon la revendication 8, caractérisé par le fait que la caractéristique (34) a l'allure d'une fonction du second degré ou d'une fonction logarithmique.
